# DEMANDE DE BREVET EUROPEEN

(11) **EP 0 572 064 A1**
(43) Date de publication de la demande: **01.12.1993**
(21) Numéro de dépôt: 93201390.7
(22) Date de dépôt: 14.05.1993
(51) Int. Cl.: B60C 25/132

(54) **Dispositif pour ajuster l'outil d'un appareil de montage et de démontage de pneus d'automobiles**

(30) Priorité: 27.05.1992 BE 9200497
(71) Demandeur: du Quesne, Francis, B-2630 Aartselaar (BE)
(72) Inventeur: du Quesne, Francis, B-2630 Aartselaar (BE)
(74) Mandataire: Ottelohe, Jozef René

(57) **Abrégé**

Un excentrique fait partie d'un cylindre sur lequel est montée la manette de commande (20) et monté à rotation dans un boîtier (16) faisant partie du bras (7), où un deuxième excentrique fait aussi partie du cylindre agissant de concert avec un poussoir (24) coopérant avec une plaque de serrage (25) disposée librement autour d'une tige-butée (26) guidée le long du bras pivotant (7) dans le boîtier (16) et dans un guide (30) faisant partie du bras (7), où une extrémité de la tigebutée (26) coopère avec un bloc d'appui (31) faisant partie de la colonne verticale (5), et où un ressort de pression (28) est disposé entre la tige butée (26) et la plaque de pression (25), le tout destiné à écarter légèrement et à fixer en même temps l'outil (10) à une distance de la roue (4), aussi bien dans un plan vertical que dans un plan horizontal.

## Description

L'invention concerne un dispositif pour ajuster dans un plan horizontal et vertical, la distance entre une roue fixée sur une table rotative et l'outil d'un appareil de montage et de démontage d'un pneu d'automobile, par rapport à ladite roue.

On connaît des appareils de montage et de démontage de pneus d'automobiles, qui se composent principalement d'un socle, d'une colonne verticale montée sur le socle, d'un bras pivotant dans un plan horizontal par rapport à la colonne, d'une tige verticalement déplaçable à' l'extrémité libre dudit bras, d'un outil pour le montage et le démontage d'un pneu et monté en bas de ladite tige, d'une table rotative à griffes pour fixer la roue sur la table et disposée sous ledit outil, d'une plaque de serrage disposée librement autour de la tige verticale, d'un poussoir poussé par un excentrique à manette de commande afin de pousser la plaque de serrage dans une position oblique sur la tige verticale, de soulever légèrement et de fixer celle-ci avec l'outil par rapport à la roue, d'un excentrique à l'autre extrémité du bras afin de faire pivoter légèrement et de fixer le bras, dans un plan horizontal par rapport à la roue, et d'une tringle d'accouplement entre les deux excentriques de sorte que par un seul mouvement de la manette de commande on obtienne un écart vertical et horizontal de l'outil par rapport à la roue.

Bien qu'il soit possible d'ajuster l'outil par rapport à la roue, par une seule manette, ces appareils présentent cependant l'inconvénient que non seulement ils sont d'une construction compliquée ce qui en augmente le prix, mais en outre ces appareils peuvent être déréglés et endommagés lorsqu'on fait usage de ces appareils d'une manière inattentive. Un inconvénient supplémentaire résidant dans le fait que le montage des différentes pièces de ces appareils prend relativement beaucoup de temps.

En vue de remédier à ces inconvénients, on a réalisé conformément à l'invention un dispositif tel que décrit dans les revendications. Ce dispositif est simple peu coûteux à fabriquer et comporte peu de pièces.

A titre d'exemple, sans aucun caractère limitatif, suit ci-dessous une description plus détaillée, d'une forme choisie de réalisation du dispositif conforme à l'invention. Cette description se réfère aux dessins annexés dans lesquels:

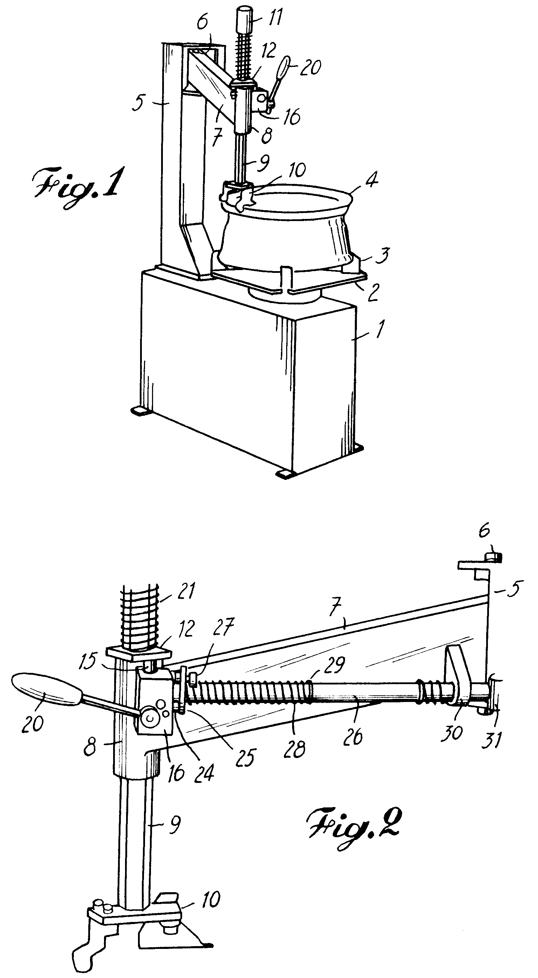

la fig. 1 est une vue en perspective d'un appareil de montage et de démontage d'un pneu d'automobile et sur lequel est monté le dispositif selon l'invention;
la fig. 2 est une vue en perspective du dispositif selon l'invention;

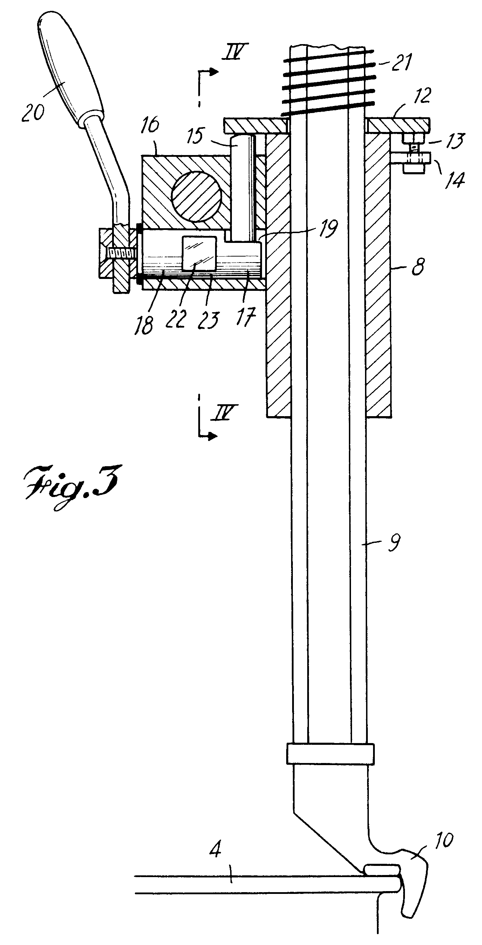

la fig. 3 est une coupe transversale du dispositif selon l'invention;

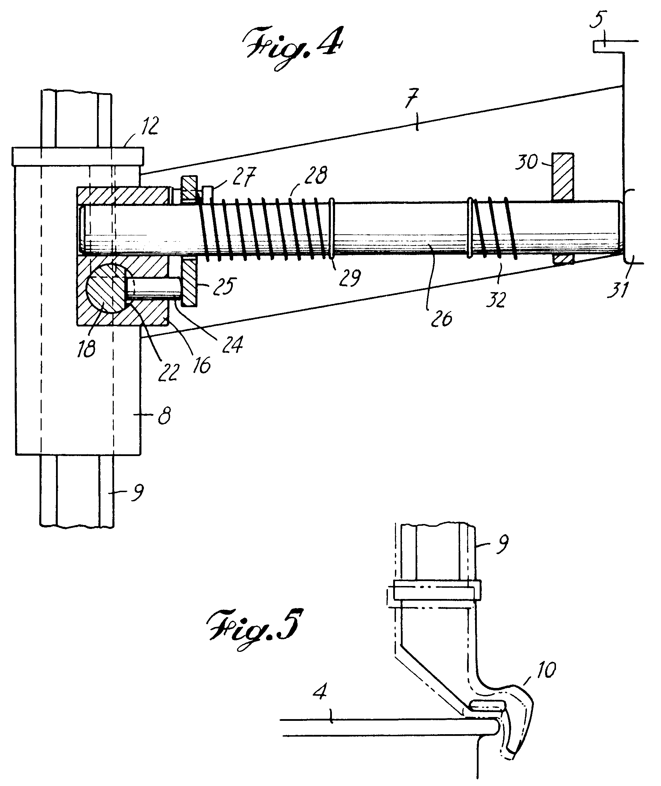

la fig. 4 est une coupe longitudinale selon la ligne IV-IV de la fig. 3;
la fig. 5 est une vue de l'outil écarté à une distance de la roue, au moyen du dispositif selon l'invention.

Dans ces figures on remarque qu'à l'avant du socle 1 de l'appareil est montée une table 2 rotative dans un plan horizontal et actionnée par un moteur, laquelle table est pourvue de griffes 3 radialement déplaçables, entre lesquelles une roue 4 est serrée. A l'arrière du socle 1 est fixée une colonne verticale 5 pourvue d'un axe 6 autour duquel peut pivoter un bras 7, dans un plan horizontal. La partie avant du bras est pourvue d'un manchon 8, dans lequel coulisse librement une tige verticale 9, dont la partie inférieure porte l'outil 10 de montage et de démontage d'un pneu. Le haut de la tige 9 est pourvu d'une poignée 11. Pour le blocage de la tige 9 dans le manchon 8, il est fait usage d'une plaque de serrage 12 disposée autour de la tige 9, laquelle plaque de serrage 12 est pourvue d'un boulon-guide 13, qui est librement déplaçable dans un oeillet 14 qui fait partie du manchon 8. La plaque de serrage 12 est obliquement poussée dans la position de blocage sur la tige verticale 9 par un poussoir 15 mobile dans un boîtier 16 fixé au manchon 8 et poussé vers le haut par un excentrique 17 formé par un cylindre 18 pourvu d'un découpage 19 et monté à rotation dans le boîtier 16. Sur ce cylindre 18 est fixée une manette de commande 20. Un ressort de pression 21 placé entre la plaque de serrage 12 et la poignée 11, équilibre le poids de la tige 9 et de l'outil 10 et pousse la plaque de serrage 12 contre le poussoir 15. Le cylindre 18 est pourvu d'un deuxième découpage 22 décalé de 90° par rapport au découpage 19 et formant avec le cylindre 18, un deuxième excentrique 23. Cet excentrique coopère avec un deuxième poussoir 24 mobile dans le boîtier 16. L'extrémité libre de ce poussoir pousse contre une plaque de serrage 25 disposée librement autour d'une tige-butée 26. La partie supérieure de la plaque de serrage 25 peut coulisser librement sur deux boulons de guidage 27, fixés dans le boitier 16, et peut prendre une position oblique par rapport à la tige-butée 26. Un ressort de pression 28 est placé autour de la tige-butée 26, entre la plaque de serrage 25 et un anneau 29 fixé sur la tige-butée 26, afin de pousser la plaque de serrage contre le poussoir 24. Une extrémité de la tige-butée 26 peut librement coulisser dans le boîtier 16 et à l'arrière la tige-butée est guidée dans un guide 30 fixé sur le bras pivotable 7. L'autre extrémité de la tige-butée prend appui sur un bloc d'appui 31 faisant partie de la colonne verticale 5. Un ressort 32 est disposé autour de la tige-butée 26 et le guide 30, afin d'attraper les chocs et de limiter la course de la tigebutée.

Dans ces figures, on remarque que la manette de commande 20 est inclinée vers l'avant et que dans cette position, le cylindre 18 à double excentrique 17-23 maintient les poussoirs 15-24 dans une position rentrée, de sorte qu'ils n'excercent aucune pression sur les plaques de serrage 12-25 et que tant la tige verticale 9 portant l'outil 10, que la tige-butée 26, soient librement déplaçables. Quand une roue 4 d'un diamètre déterminé est fixée entre les griffes 3 de la table 2, le bras pivotable 7 est tiré vers la roue à l'aide de la poignée 11 et la tige 9 est déplacée verticalement jusqu'à ce que l'outil 10 soit dans la position voulue en contact avec la roue. Ensuite la manette de commande 20 est basculée vers l'arrière, de sorte que le cylindre 18 à double excentrique 17-23 pousse en même temps les poussoirs 15-24 dans une position sortie et que ceux-ci pressent les plaques de serrage 12-25 obliquement sur les tiges 9 et 26, ce qui provoque un soulèvement léger de la tige verticale 9 et de l'outil 10 par rapport à la roue 4. Parce que la tige-butée 26 prend appui contre le bloc d'appui 31 de la colonne 5, la plaque de serrage 25 déplace en même temps le boîtier 16 sur la tige-butée 26, de sorte que le bras 7 pivote légèrement autour de l'axe 6 et que l'outil 10 soit aussi écarté légèrement de la roue 4, dans un plan horizontal.

Pour l'enlèvement de la roue et le replacement d'une roue de la même dimension que la première sur la table rotative 2, il suffit de pivoter, au moyen de la poignée 11, le bras 7 avec l'outil 10, de sorte que l'outil soit déplacé à une distance de la roue. Lorsqu'ensuite le bras 7 avec l'outil 10 est de nouveau pivoté vers la roue 4, l'outil 10 sera automatiquement ramené à la distance présélectionnée de la roue.

Il va de soi que les pièces décrites ci-dessus peuvent avoir n'importe quelles formes et dimensions et que certaines de ces pièces peuvent être remplacées par d'autres qui poursuivent le même but. La disposition relative de ces pièces peut également différer.

## Revendications

1. Dispositif pour ajuster dans un plan horizontal et vertical la distance entre une roue (4) fixée sur une table rotative (2) et l'outil (10) d'un appareil de montage et de démontage d'un pneu d'automobile, lequel appareil se compose principalement d'un socle (1), d'une colonne verticale (5) montée sur le socle, d'un bras (7) pouvant pivoter dans un plan horizontal par rapport à la colonne (5), d'une tige (9) verticalement déplaçable à l'extrémité libre dudit bras, d'un outil (10) pour le montage et le démontage d'un pneu et monté en bas de ladite tige (9), d'une table rotative (2) à griffes (3) pour fixer la roue (4) sur la table et disposée sous ledit outil, d'une plaque de serrage (12) disposée librement autour de la tige (9), d'un poussoir (15) et d'un excentrique (17) à manette de commande (20) afin de pousser la plaque de serrage dans une position oblique sur la tige verticale, de soulever légèrement et de fixer celle-ci avec l'outil (10) par rapport à la roue, et d'un deuxième excentrique afin de faire pivoter légèrement et de fixer le bras (7) dans un plan horizontal par rapport à la roue, caractérisé par le fait que l'excentrique (17) fait partie d'un cylindre (18) sur lequel est montée la manette de commande (20) et monté à rotation dans un boîtier (16) faisant partie du bras(7), où un deuxième excentrique (23) fait aussi partie du cylindre (18) agissant de concert avec un poussoir (24) coopérant avec une plaque de serrage (25) disposée librement autour d'une tige-butée (26) guidée le long du bras pivotant (7) dans le boîtier (16) et dans un guide (30) faisant partie du bras (7), où une extrémité de la tigebutée (26) coopère avec un bloc d'appui (31) faisant partie de la colonne verticale (5), et où un ressort de pression (28) est disposé entre la tige butée (26) et la plaque de pression (25), le tout destiné à écarter légèrement et à fixer en même temps l'outil (10) à une distance de la roue (4), aussi bien dans un plan vertical que dans un plan horizontal.

2. Dispositif conforme à la revendication 1, caractérisé par le fait que le cylindre (18) est pourvu de deux découpages (19-22) décalés de 90° l'un de l'autre et qui forment avec le cylindre les deux excentriques (17-23).

3. Dispositif conforme à la revendication 1, caractérisé par le fait que la plaque de serrage (25) disposée autour de la tige-butée (26) est suspendue librement à deux boulons de guidage (27) fixés dans le boîtier (16), sur quelle plaque le poussoir (24) excerce une pression pour le blocage de la tige-butée (26) dans le boîtier (16).
